# EUROPEAN PATENT APPLICATION

(11) **EP 4 651 605 A1**
(43) Date of publication of application: **19.11.2025**
(21) Application number: 24741351.1
(22) Date of filing: 12.01.2024
(51) Int. Cl.: H04W 72/25

(54) **INFORMATION PROCESSING METHOD AND APPARATUS, INFORMATION TRANSMISSION METHOD AND APPARATUS, AND TERMINAL**

(30) Priority: 12.01.2023 CN 202310039338
(71) Applicant: Datang Mobile Communications Equipment Co., Ltd., Beijing 100085 (CN)
(72) Inventor: ZHAO, Yali, Beijing 100085 (CN)
(74) Representative: Dompatent
(86) International application number: PCT/CN2024/071943
(87) International publication number: WO 2024/149355

(57) **Abstract**

An information processing method and apparatus, an information transmission method and apparatus, and a terminal are provided in the present disclosure. The information processing method is performed by a first terminal, and comprises: receiving Channel Occupancy Time (COT) information from at least one destination identifier (ID); and performing selection of a first object based on the COT information, wherein the first object comprises a destination ID and/or a logical channel.

## Description

### CROSS-REFERENCE TO RELATED APPLICATION

The present disclosure claims a priority to the Chinese patent application No. 202310039338.7, titled as "information processing method and apparatus, information transmission method and apparatus, and terminal", and filed to the China National Intellectual Property Administration on January 12, 2023, the disclosure of which is incorporated herein by reference in its entirety.

### TECHNICAL FIELD

The present disclosure relates to the field of communication technologies, in particular to an information processing method and apparatus, an information transmission method and apparatus, and a terminal.

### BACKGROUND

The sidelink unlicensed (SL-U) supports a Channel Occupancy Time (COT) sharing mechanism. How to perform a sidelink interface resource allocation in the COT sharing mechanism is an urgent problem to be solved.

### SUMMARY

Embodiments of the present disclosure provide an information processing method and apparatus, an information transmission method and apparatus, and a terminal, so as to ensure a smooth sidelink interface resource allocation in a COT sharing mechanism.

In order to solve the above technical problem, an embodiment of the present disclosure provides an information processing method performed by a first terminal, the method including:
receiving Channel Occupancy Time (COT) information from at least one destination ID; and
performing selection of a first object based on the COT information, wherein the first object includes a destination ID and/or a logical channel.

Optionally, in a case where the first object includes the logical channel, the performing the selection of the first object based on the COT information includes:
selecting a first destination ID;
determining, according to the COT information sent from the first destination ID, a channel access priority class (CAPC) corresponding to the COT information; and
performing selection of a logical channel belonging to the first destination ID according to the CAPC;
wherein a CAPC value of the logical channel is less than or equal to a value of the CAPC corresponding to the COT information.

Optionally, the performing the selection of the logical channel belonging to the first destination ID according to the CAPC includes:
in case that a sidelink (SL) grant falls within a COT time period indicated by the COT information corresponding to the first destination ID, performing the selection of the logical channel belonging to the first destination ID according to the CAPC.

Optionally, the selecting the first destination ID includes:
in case that an SL grant falls within a COT time period indicated by the COT information sent from a second destination ID, preferentially selecting the second destination ID as the first destination ID when selecting the first destination ID.

Optionally, the method further includes:
obtaining priorities of second objects corresponding to the second destination IDs when the number of the second destination IDs is greater than 1; and
determining the second destination ID with the second object having the highest priority as the first destination ID;
wherein the second object is an SL medium access control control element (MAC CE) and/or a logical channel belonging to the second destination ID.

Optionally, in a case where the first object includes the destination ID, the performing the selection of the first object based on the COT information includes:
in case that an SL grant falls within a COT time period indicated by the COT information sent from a third destination ID, preferentially selecting the third destination ID as a selected fourth destination ID when selecting the destination ID.

Optionally, the method further includes:
obtaining priorities of second objects corresponding to the third destination IDs when the number of the third destination IDs is greater than 1; and
determining a third destination ID with the second object having the highest priority as the fourth destination ID;
wherein the second object is an SL MAC CE and/or a logical channel belonging to the third destination ID.

Optionally, the method further includes:
receiving the COT information through first signaling;
wherein the first signaling includes at least one of:
   physical layer signaling;
   an SL MAC CE; or
   PC5 radio resource control (RRC) signaling.

Optionally, the COT information includes at least one of:
a COT time duration;
a COT start position; or
a value of a CAPC corresponding to the COT information.

An embodiment of the present disclosure further provides an information transmission method performed by a second terminal, the method including:
sending COT information through first signaling, the COT information enabling a first terminal to perform selection of a first object based on the COT information, and the first object including a destination ID and/or a logical channel;
wherein the first signaling includes at least one of:
   physical layer signaling;
   an SL MAC CE; or
   PC5 RRC signaling.

Optionally, the COT information includes at least one of:
a COT time duration;
a COT start position; or
a value of a CAPC corresponding to the COT information.

An embodiment of the present disclosure further provides a terminal which is a first terminal, including a memory, a transceiver and a processor:
wherein the memory is configured to store a computer program; the transceiver is configured to transmit and receive data under the control of the processor; and the processor is configured to read the computer program in the memory and perform the following steps:
receiving COT information from at least one destination ID; and
performing selection of a first object based on the COT information, wherein the first object includes a destination ID and/or a logical channel.

Optionally, in a case where the first object includes the logical channel, the processor is configured to read the computer program in the memory and perform the following steps:
selecting a first destination ID;
determining, according to the COT information sent from the first destination ID, a CAPC corresponding to the COT information; and
performing selection of a logical channel belonging to the first destination ID according to the CAPC;
wherein a CAPC value of the logical channel is less than or equal to a value of the CAPC corresponding to the COT information.

Optionally, the processor is configured to read the computer program in the memory and perform the following step:
in case that an SL grant falls within a COT time period indicated by the COT information corresponding to the first destination ID, performing the selection of the logical channel belonging to the first destination ID according to the CAPC.

Optionally, the processor is configured to read the computer program in the memory and perform the following step:
in case that an SL grant falls within a COT time period indicated by the COT information sent from a second destination ID, preferentially selecting the second destination ID as the first destination ID when selecting the first destination ID.

Optionally, the processor is configured to read the computer program in the memory and perform the following steps:
obtaining priorities of second objects corresponding to the second destination IDs when the number of the second destination IDs is greater than 1; and
determining the second destination ID with the second object having the highest priority as the first destination ID;
wherein the second object is an SL MAC CE and/or a logical channel belonging to the second destination ID.

Optionally, in a case where the first object includes the destination ID, the processor is configured to read the computer program in the memory and perform the following step:
in case that an SL grant falls within a COT time period indicated by the COT information sent from a third destination ID, preferentially selecting the third destination ID as a selected fourth destination ID when selecting the destination ID.

Optionally, the processor is configured to read the computer program in the memory and perform the following steps:
obtaining priorities of second objects corresponding to the third destination IDs when the number of the third destination IDs is greater than 1; and
determining a third destination ID with the second object having the highest priority as the fourth destination ID;
wherein the second object is an SL MAC CE and/or a logical channel belonging to the third destination ID.

Optionally, the processor is configured to read the computer program in the memory and perform the following step:
receiving the COT information through first signaling;
wherein the first signaling includes at least one of:
   physical layer signaling;
   an SL MAC CE; or
   PC5 RRC signaling.

Optionally, the COT information includes at least one of:
a COT time duration;
a COT start position; or
a value of a CAPC corresponding to the COT information.

An embodiment of the present disclosure further provides a terminal which is a second terminal, including a memory, a transceiver and a processor:
wherein the memory is configured to store a computer program; the transceiver is configured to transmit and receive data under the control of the processor; and the processor is configured to read the computer program in the memory and perform the following steps:
sending, by the transceiver, COT information through first signaling, the COT information enabling a first terminal to perform selection of a first object based on the COT information, and the first object including a destination ID and/or a logical channel;
wherein the first signaling includes at least one of:
   physical layer signaling;
   an SL MAC CE; or
   PC5 RRC signaling.

Optionally, the COT information includes at least one of:
a COT time duration;
a COT start position; or
a value of a CAPC corresponding to the COT information.

An embodiment of the present disclosure further provides an information processing apparatus applied to a first terminal, the information processing apparatus including:
a first receiving unit, configured to receive COT information from at least one destination ID; and
a performing unit, configured to perform selection of a first object based on the COT information, wherein the first object includes a destination ID and/or a logical channel.

An embodiment of the present disclosure further provides an information transmission apparatus applied to a second terminal, the information transmission apparatus including:
a sending unit configured to send COT information through first signaling, the COT information enabling a first terminal to perform selection of a first object based on the COT information, and the first object including a destination ID and/or a logical channel;
wherein the first signaling includes at least one of:
   physical layer signaling;
   an SL MAC CE; or
   PC5 RRC signaling.

An embodiment of the present disclosure further provides a processor-readable storage medium storing a computer program, wherein the computer program, when being executed by a processor, cause the processor to perform the aforementioned method.

The present disclosure achieves the following advantageous effects:
according to the above solutions, the destination ID selection and/or the logical channel selection is performed based on the COT information received from at least one destination ID, so as to ensure that the terminal can smoothly perform a sidelink interface resource allocation in the COT sharing mechanism.

### BRIEF DESCRIPTION OF THE DRAWINGS

In order to explain the technical solutions in the embodiments of the present disclosure or in the related art more clearly, the drawings to be used in the description of the embodiments or the related art will be briefly introduced below. Obviously, the drawings involved in the following description merely illustrate some embodiments of the present disclosure, and those of ordinary skill in the art can obtain other drawings from these drawing without paying any creative effort.
Fig. 1 illustrates a flowchart of an information processing method according to an embodiment of the present disclosure.
Fig. 2 illustrates a flowchart of an information transmission method according to an embodiment of the present disclosure.
Fig. 3 illustrates a schematic unit diagram of an information processing apparatus according to an embodiment of the present disclosure.
Fig. 4 illustrates a structural diagram of a terminal according to an embodiment of the present disclosure.
Fig. 5 illustrates a schematic unit diagram of an information transmission apparatus according to an embodiment of the present disclosure.

### DETAILED DESCRIPTION

The technical solutions in the embodiments of the present disclosure will be clearly and thoroughly described below with reference to the drawings for the embodiments of the present disclosure. Obviously, those described are only parts, rather than all, of the embodiments of the present disclosure. Based on the embodiments of the present disclosure, any other embodiment obtained by those of ordinary skill in the art without paying any creative effort should fall within the protection scope of the present disclosure.

The terms such as "first" and "second" in the specification and the claims of the present disclosure are used to distinguish similar objects and are not necessarily to describe a particular order or precedence. It should be understood that the data so used may be interchanged under appropriate circumstances, so that the embodiments of the present disclosure described here, for example, are implemented in an order in addition to those illustrated or described here. Further, the terms "comprise", "include", "have" and any variations thereof, are intended to cover non-exclusive inclusions, e.g., a process, a method, a system, a product, or a device that includes a series of steps or elements is not necessarily limited to the explicitly listed steps or units, but may include other steps or units not expressly listed or inherent to such process, method, system, product, or device.

In the embodiments of the present disclosure, the term "and/or" is only an association relationship that describes the associated objects, indicating that there may be three relationships. For example, A and/or B may mean that A exists alone, A and B both exist, and B exists alone. The character "/" generally indicates that the contextually associated objects are in an "or" relationship. In the embodiments of the present disclosure, the term "a plurality of" refers to two or more, and other quantifiers are similar.

In the embodiments of the present disclosure, the phase such as "exemplary" or "for example" is used to indicate an example, an illustration, or an explanation. Any embodiment or design solution described with "exemplary" or "for example" in the embodiments of the present disclosure should not be construed as more preferable or more advantageous than any other embodiment or design solution. To be exact, the use of the word such as "exemplary" or "for example" is intended to present related concepts in a specific manner.

The related concepts mentioned in the present disclosure are briefly described below.

The traditional wireless communication adopts a cellular network communication mode, that is, a terminal and a network device perform an uplink and downlink data/control information transmission through a Uu interface.

The direct communication refers to a mode in which adjacent terminals can perform a data transmission through a direct communication link (also called sidelink or PC5 link, hereinafter referred to as SL) within a short distance. A wireless interface corresponding to the sidelink is called a direct communication interface (also called sidelink interface or PC5 interface).

The COT sharing mechanism means that after seizing a channel through a listen before talk (LBT) mechanism, terminal A shares its COT with terminal B, where terminal B is a communication peer of a sidelink interface of terminal A, terminal A is also called initiating UE, and terminal B is also called responding UE.

The embodiments of the present disclosure are described below with reference to the drawings. An information processing method and apparatus, an information transmission method and apparatus, and a terminal according to the embodiments of the present disclosure can be applied to a wireless communication system. The wireless communication system may be a system adopting the 5^{th} Generation (5G) mobile communication technology (hereinafter collectively referred to as a 5G system). Those skilled in the art will appreciate that a 5G New Radio (NR) system is only an example rather than a limitation.

The embodiments of the present disclosure provide an information processing method and apparatus, an information transmission method and apparatus, and a terminal, so as to ensure that the responding UE perform a sidelink interface resource allocation smoothly in the COT sharing mechanism.

In which, the method and the apparatus are based on the same application concept. Since the principles for solving problems by the method and the apparatus are similar, the implementations of the apparatus and the method can refer to each other, and repeated content will not be described.

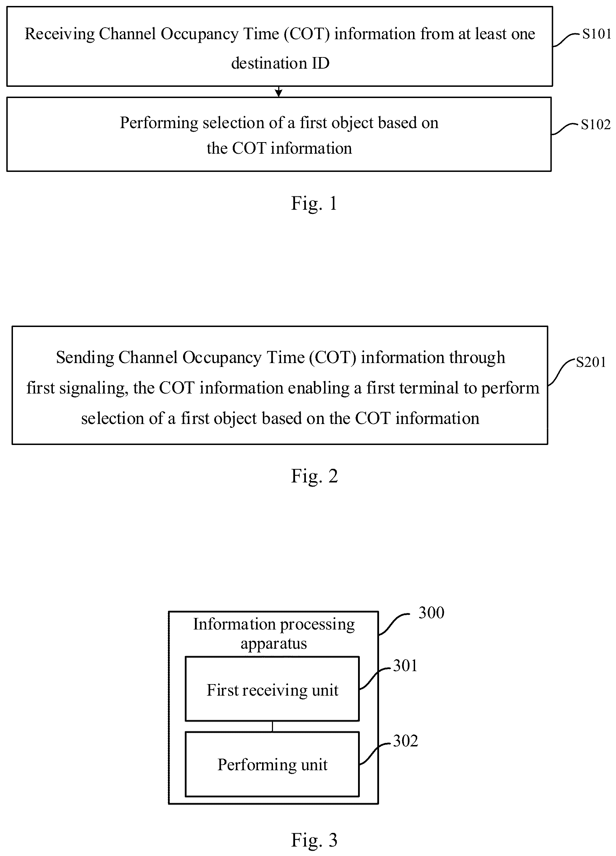

As illustrated in Fig. 1, an embodiment of the present disclosure provides an information processing method performed by a first terminal, and the method includes following step S101 and step S102.

Step S101: receiving Channel Occupancy Time (COT) information from at least one destination identifier (ID).

It should be noted that the destination ID corresponds to a second terminal. That is, the destination ID is an address of the second terminal, such as a sidelink interface L2 destination ID, a layer 2 address, a layer 3 address, or a media access control (MAC) address. Meanwhile, one second terminal may be corresponding to one or more destination IDs.

The second terminal refers to a terminal capable of sending COT information, and the first terminal refers to a terminal capable of receiving the COT information sent by the second terminal.

To be further noted, the COT information may also be called COT sharing information or COT sharing information.

Step S102: performing selection of a first object based on the COT information.

Specifically, the first object includes the destination ID and/or a logical channel.

Optionally, the COT information includes at least one of A11, A12 or A13.

A11: a COT time duration.

For example, the COT time duration may be an absolute time duration, with units such as subframes, milliseconds (ms), or time slots.

A12: a COT start position.

For example, the start position represents a time-domain position, which may be specifically identified by one or combinations of a radio frame, a time slot, a subframe, or absolute time. The first terminal may determine a time period corresponding to the COT based on the COT start position and the COT time duration.

A13: a channel access priority class (CAPC) value corresponding to the COT information.

It should be noted that in this case, the COT information directly carries its corresponding CAPC value. Specifically, the CAPC value is generally an integer, such as 1, 2, 3, 4, or the like.

The selection of the first object is described in detail below in different cases.

### I. The first object includes a logical channel

Optionally, in this case, in another embodiment of the present disclosure, the performing the selection of the first object based on the COT information includes following steps S1021, S1022 and S1023.

Step S1021: selecting a first destination ID.

It should be noted that the first destination ID may be understood as a selected destination ID.

Step S1022: determining, according to the COT information sent from the first destination ID, a CAPC corresponding to the COT information.

It should be noted here that each COT information corresponds to one CAPC, which may be explicitly indicated (i.e., carried in the COT information) or implicitly indicated.

Step S1023: performing selection of a logical channel belonging to the first destination ID according to the CAPC;
wherein a CAPC value of the logical channel is less than or equal to a value of the CAPC corresponding to the COT information.

It should be noted that in the embodiment of the present disclosure, when selection of the logical channel belonging to the first destination ID is performed, the CAPC value of the selected logical channel should be less than or equal to the CAPC value corresponding to the COT information.

Optionally, in another embodiment of the present disclosure, the performing the selection of the logical channel belonging to the first destination ID according to the CAPC includes:
in case that an SL grant falls within a COT time period indicated by the COT information corresponding to the first destination ID, performing the selection of the logical channel belonging to the first destination ID according to the CAPC.

That is, only when the SL grant falls within the COT time period indicated by the COT information corresponding to the selected destination ID, the first terminal merely considers the logical channel whose CAPC value is less than or equal to the CAPC value corresponding to the COT information when performing logical channel selection under the selected destination ID.

Optionally, the selection of the first destination ID may be based on the existing method or the COT information. Taking the selection of the first destination ID based on the COT information as an example, specifically, in another embodiment of the present disclosure, the selecting the first destination ID includes:
in case that an SL grant falls within a COT time period indicated by the COT information sent from a second destination ID, preferentially selecting the second destination ID as the first destination ID when selecting the first destination ID.

That is, if the SL grant falls within the COT time period indicated by the COT information corresponding to a certain destination ID, the first terminal preferentially selects the destination ID when selecting the destination ID.

Optionally, in another embodiment of the present disclosure, the method further includes:
obtaining priorities of second objects corresponding to the second destination IDs when the number of the second destination IDs is greater than 1; and
determining the second destination ID with the second object having the highest priority as the first destination ID;
wherein the second object is an SL medium access control control element (MAC CE) and/or a logical channel belonging to the second destination ID.

This case can be understood as that if the SL grant falls within the COT time periods indicated by the COT information corresponding to a plurality of (two or more) destination IDs, it is necessary to select, based on the priorities of the SL MAC CEs and/or the logical channels corresponding to the destination IDs, a destination ID corresponding to an SL MAC CE and/or a logical channel with a highest priority as the selected destination ID.

### II. The first object includes a destination ID

Optionally, in this case, in another embodiment of the present disclosure, the performing the selection of the first object based on the COT information includes:
in case that an SL grant falls within a COT time period indicated by the COT information sent from a third destination ID, preferentially selecting the third destination ID as a selected fourth destination ID when selecting the destination ID.

That is, if the SL grant falls within the COT time period indicated by the COT information corresponding to a certain destination ID, the first terminal preferentially selects the destination ID when selecting the destination ID.

Optionally, in another embodiment of the present disclosure, the method further includes:
obtaining priorities of second objects corresponding to the third destination IDs when the number of the third destination IDs is greater than 1; and
determining a third destination ID with the second object having the highest priority as the fourth destination ID;
wherein the second object is an SL MAC CE and/or a logical channel belonging to the third destination ID.

This case can be understood as that if the SL grant falls within the COT time periods indicated by the COT information corresponding to a plurality of (two or more) destination IDs, it is necessary to select, based on the priorities of the SL MAC CEs and/or the logical channels corresponding to the destination IDs, a destination ID corresponding to an SL MAC CE and/or a logical channel having the highest priority as the selected destination ID.

It should be noted that in this case, the first terminal only needs to select the destination ID based on the COT information, and the logical channel selection under the selected destination ID is still based on the existing method.

Further, after the destination ID and the logical channel are selected, resources may be allocated to the selected logical channel, so as to realize a sidelink interface resource allocation.

Optionally, in another embodiment of the present disclosure, the method further includes:
receiving the COT information through first signaling;
wherein the first signaling includes at least one of:
   B11: physical layer signaling;
   B12: an SL MAC CE; or
   B13: PC5 radio resource control (RRC) signaling.

The specific application mode of the present disclosure will be described in detail as follows.

Application case 1: the COT information is considered only during the logical channel selection.

In this case, the specific implementation process includes following steps S11, S12, S13 and S14.

Step S11: the destination ID sends the COT information to the first terminal.

The COT information may be transmitted using physical layer signaling, SL MAC CE or PC5 RRC signaling. The COT information at least includes one or combinations of:
a COT time duration;
a COT start position; or
a value of a CAPC corresponding to the COT information.

It should be noted that the number of the destination ID(s) may be one or more; and the destination ID corresponds to the second terminal.

Step S12: the first terminal performs a destination ID selection.

The first terminal receives one SL grant and performs the destination ID selection in the following process:
for an SL communication, a destination ID with the second object having the highest priority is selected as the selected first destination ID according to the priorities of the second objects corresponding to the destination IDs; the second object is an SL MAC CE and/or a logical channel, and the logical channel shall at least meet the following conditions:
C11: there is transmittable SL data;
C12: a token bucket size SBj corresponding to the logical channel is > 0;
C13: if the SL grant is a type 1 pre-configured grant, the type 1 pre-configured grant (sl-configuredGrantType1Allowed) is allowed to be used in configuration information corresponding to the logical channel;
C14: if the SL grant is a pre-configured grant, a pre-configured grant list allowed to be used (sl-AllowedCG-List) in configuration information corresponding to the logical channel contains a pre-configured grant index corresponding to the SL grant; and
C15: if no physical sidelink feedback channel (PSFCH) is configured in the SL grant, a hybrid automatic repeat request (HARQ) attribute (sl-HARQ-FeedbackEnabled) corresponding to the logical channel shall be: disabled.

Step S13: the first terminal performs selection of a logical channel belonging to the first destination ID selected in Step S12.

Optionally, in case that no COT information has been sent from the first destination ID selected in Step S12, the logical channel belonging to the first destination ID is selected under the following conditions:
C21: there is transmittable SL data;
C22: if the SL grant is a type 1 pre-configured grant, the type 1 pre-configured grant (sl-configuredGrantType1Allowed) is allowed to be used in configuration information corresponding to the logical channel;
C23: if the SL grant is a pre-configured grant, a pre-configured grant list allowed to be used (sl-AllowedCG-List) in configuration information corresponding to the logical channel contains a pre-configured grant index corresponding to the SL grant; and
C24: the HARQ attribute of the logical channel meets a first condition;
wherein the first condition includes one of:
C241: if the SL grant is configured with a PSFCH, the HARQ attribute of a logical channel with a highest priority belonging to the first destination ID is set to be enabled, and the HARQ attribute of the logical channel is also: enabled;
C242: if the SL grant is configured with a PSFCH, the HARQ attribute of a channel with a highest priority belonging to the first destination ID is set to be disabled, and the HARQ attribute of the logical channel is also: disabled; and
C243: if the SL grant is configured with no PSFCH, the HARQ attribute of the logical channel is: disabled.

Optionally, in case that the COT information is sent from the first destination ID selected in Step S12 to the first terminal, and the SL grant falls within the time period indicated by the COT information, the logical channel belonging to the destination ID is selected under the following conditions:
C31: a CAPC value of the logical channel is less than or equal to a value of the CAPC corresponding to the COT information;
C32: there is transmittable SL data;
C33: if the SL grant is configured with a PSFCH, the type 1 pre-configured grant (sl-configuredGrantType1Allowed) is allowed to be used in configuration information corresponding to the logical channel;
C34: if the SL grant is a pre-configured grant, a pre-configured grant list allowed to be used (sl-AllowedCG-List) in configuration information corresponding to the logical channel contains a pre-configured grant index corresponding to the SL grant; and
C35: the HARQ attribute of the logical channel meets a second condition;
wherein the second condition includes one of:
C351: if the SL grant is configured with a PSFCH, the HARQ attribute of a channel with a highest priority belonging to the first destination ID is set to be enabled, and the HARQ attribute of the logical channel is also: enabled;
C352: if the SL grant is configured with a PSFCH, the HARQ attribute of a channel with a highest priority belonging to the first destination ID is set to be disabled, and the HARQ attribute of the logical channel is also: disabled; and
C353: if the SL grant is configured with no PSFCH, the HARQ attribute of the logical channel is: disabled.

Step S14: the first terminal performs a resource allocation.

For the logical channel selected in Step S13, the resource allocation is performed in the following process:
a first round of resource allocation: allocating resources to the logical channels with SBj>0 according to sPBR in a descending order of the priorities of the logical channels, and updating SBj; and
a second round of resource allocation: if there are any remaining resources, continuing to allocate resources to the logical channels in the descending order of the priorities (regardless of whether SBj is greater than 0) until resources are exhausted or resources are allocated to all data.

Application case 2: the COT information is considered during both the destination ID selection and the logical channel selection
In this case, the specific implementation process includes following steps S21, S22, S23 and S24.

Step S21: the destination ID sends COT information to the first terminal.

The COT information may be transmitted using physical layer signaling, SL MAC CE or PC5 RRC signaling. The COT information at least includes one or combinations of:
a COT time duration;
a COT start position; or
a value of a CAPC corresponding to the COT information.

It should be noted that the number of the destination ID(s) may be one or more; and the destination ID corresponds to the second terminal.

Step S22: the first terminal performs a destination ID selection.

Optionally, in case that none of unicast communication peers of the first terminal sends the COT information to the first terminal, or although the first terminal receives the COT information, the SL grant is not within any COT time period indicated by the COT information, the process of the destination ID selection is as follows:
for an SL communication, a destination ID with the second object having the highest priority is selected as the selected first destination ID according to the priorities of the second objects corresponding to the destination IDs. In which, the second object is an SL MAC CE and/or a logical channel, and the logical channel shall at least meet the following conditions:
D11: there is transmittable SL data;
D12: a token bucket size SBj corresponding to the logical channel is > 0;
D13: if the SL grant is a type 1 pre-configured grant, the type 1 pre-configured grant (sl-configuredGrantType1Allowed) is allowed to be used in configuration information corresponding to the logical channel;
D14: if the SL grant is a pre-configured grant, a pre-configured grant list allowed to be used (sl-AllowedCG-List) in configuration information corresponding to the logical channel contains a pre-configured grant index corresponding to the SL grant; and
D15: if no physical sidelink feedback channel (PSFCH) is configured in the SL grant, a hybrid automatic repeat request (HARQ) attribute (sl-HARQ-FeedbackEnabled) corresponding to the logical channel shall be: disabled.

Optionally, if at least one unicast communication peer of the first terminal sends the COT information to the first terminal and the SL grant falls within the COT time period indicated by the COT information, the process of the destination ID selection is as follows:
when selecting the destination ID for the SL grant, the first terminal selects preferentially the second destination ID where the SL grant falls within the COT time period indicated by the COT information.

When the number of the second destination IDs is greater than 1, a second destination ID with the second object having the highest priority is determined as the first destination ID according to the priorities of the second objects corresponding to the second destination IDs; the second object is an SL MAC CE and/or a logical channel, and the logical channel shall meet the following conditions:
D21: there is transmittable SL data;
D22: a token bucket size SBj corresponding to the logical channel is > 0;
D23: if the SL grant is a type 1 pre-configured grant, the type 1 pre-configured grant (sl-configuredGrantType1Allowed) is allowed to be used in configuration information corresponding to the logical channel;
D24: if the SL grant is a pre-configured grant, a pre-configured grant list allowed to be used (sl-AllowedCG-List) in configuration information corresponding to the logical channel contains a pre-configured grant index corresponding to the SL grant; and
D25: if the SL grant is configured with no PSFCH, an HARQ attribute (sl-HARQ-FeedbackEnabled) corresponding to the logical channel shall be: disabled.

Step S23: the first terminal performs selection of a logical channel belonging to the first destination ID selected in Step S22.

Optionally, in case that no COT information has been sent from the first destination ID selected in Step S22, the logical channel belonging to the destination ID is selected under the following conditions:
D31: there is transmittable SL data;
D32: if the SL grant is a type 1 pre-configured grant, the type 1 pre-configured grant (sl-configuredGrantType1Allowed) is allowed to be used in configuration information corresponding to the logical channel;
D33: if the SL grant is a pre-configured grant, a pre-configured grant list allowed to be used (sl-AllowedCG-List) in configuration information corresponding to the logical channel contains a pre-configured grant index corresponding to the SL grant; and
D34: the HARQ attribute of the logical channel meets a third condition;
wherein the third condition includes one of:
D341: if the SL grant is configured with a PSFCH, the HARQ attribute of a channel with a highest priority belonging to the fourth destination ID is set to be enabled, and the HARQ attribute of the logical channel is also: enabled;
D342: if the SL grant is configured with a PSFCH, the HARQ attribute of a channel with a highest priority belonging to the fourth destination ID is set to be disabled, and the HARQ attribute of the logical channel is also: disabled; and
D343: if the SL grant is configured with no PSFCH, the HARQ attribute of the logical channel is: disabled.

Optionally, in case that the second terminal corresponding to the first destination ID selected in Step S22 sends the COT information to the first terminal and the SL grant falls within the time period indicated by the COT information, the logical channel belonging to the destination ID is selected under the following conditions:
D41: the CAPC value of the logical channel is less than or equal to the CAPC value corresponding to the COT information;
D42: there is transmittable SL data;
D43: if the SL grant is configured with a PSFCH, the type 1 pre-configured grant (sl-configuredGrantType1Allowed) is allowed to be used in configuration information corresponding to the logical channel;
D44: if the SL grant is a pre-configured grant, a pre-configured grant list allowed to be used (sl-AllowedCG-List) in configuration information corresponding to the logical channel contains a pre-configured grant index corresponding to the SL grant; and
D45: the HARQ attribute of the logical channel meets a fourth condition;
wherein the fourth condition includes one of:
D451: if the SL grant is configured with a PSFCH, the HARQ attribute of a channel with a highest priority belonging to the first destination ID is set to be enabled, and the HARQ attribute of the logical channel is also: enabled; or
D452: if the SL grant is configured with a PSFCH, the HARQ attribute of a channel with a highest priority belonging to the first destination ID is set to be disabled, and the HARQ attribute of the logical channel is also: disabled; and
D453: if the SL grant is configured with no PSFCH, the HARQ attribute of the logical channel is: disabled.

Step S24: the first terminal performs a resource allocation.

For the logical channel selected in Step S23, the resource allocation is performed in the following process:
a first round of resource allocation: allocating resources to the logical channels with SBj>0 according to sPBR in a descending order of the priorities of the logical channels, and updating SBj; and
a second round of resource allocation: in case that there are any remaining resources, continuing to allocate resources to the logical channels in the descending order of the priorities (regardless of whether SBj is greater than 0) until resources are exhausted or resources are allocated to all data.

Application case 3: the COT information is considered only during the destination ID selection.

In this case, the specific implementation process includes following steps S31, S32, S33 and S34.

Step S31: the destination ID sends the COT information to the first terminal.

The COT information may be transmitted using physical layer signaling, SL MAC CE or PC5 RRC signaling. The COT information at least includes one or combinations of:
a COT time duration;
a COT start position; or
a value of a CAPC corresponding to the COT information.

It should be noted that the number of the destination ID(s) may be one or more; and the destination ID corresponds to the second terminal.

Step S32: the first terminal performs a destination ID selection.

Optionally, in case that none of unicast communication peers of the first terminal sends the COT information to the first terminal, or although the first terminal receives the COT information, the SL grant is not within any COT time period indicated by the COT information, the process of the destination ID selection is as follows:
for an SL communication, a destination ID with the second object having the highest priority is selected as the selected fourth destination ID according to the priorities of the second objects corresponding to the destination IDs. In which, the second object is an SL MAC CE and/or a logical channel, and the logical channel shall at least meet the following conditions:
E11: there is transmittable SL data;
E12: a token bucket size SBj corresponding to the logical channel is > 0;
E13: if the SL grant is a type 1 pre-configured grant, the type 1 pre-configured grant (sl-configuredGrantType1Allowed) is allowed to be used in configuration information corresponding to the logical channel;
E14: if the SL grant is a pre-configured grant, a pre-configured grant list allowed to be used (sl-AllowedCG-List) in configuration information corresponding to the logical channel contains a pre-configured grant index corresponding to the SL grant; and
E15: if no PSFCH is configured in the SL grant, an HARQ attribute (sl-HARQ-FeedbackEnabled) corresponding to the logical channel shall be: disabled.

Optionally, in case that at least one unicast communication peer of the first terminal sends the COT information to the first terminal and the SL grant falls within the COT time period indicated by the COT information, the process of the destination ID selection is as follows:
when selecting the destination ID for the SL grant, the first terminal selects preferentially the third destination ID where the SL grant falls within the COT time period indicated by the COT information.

When the number of the third destination IDs is greater than 1, a third destination ID with the second object having the highest priority is determined as the fouth destination ID according to the priorities of the second objects corresponding to the third destination IDs. In which, the second object is an SL MAC CE and/or a logical channel, and the logical channel shall meet the following conditions:
E21: there is transmittable SL data;
E22: a token bucket size SBj corresponding to the logical channel is > 0;
E23: if the SL grant is a type 1 pre-configured grant, the type 1 pre-configured grant (sl-configuredGrantType1Allowed) is allowed to be used in configuration information corresponding to the logical channel;
E24: if the SL grant is a pre-configured grant, a pre-configured grant list allowed to be used (sl-AllowedCG-List) in configuration information corresponding to the logical channel contains a pre-configured grant index corresponding to the SL grant; and
E25: if the SL grant is configured with no PSFCH, an HARQ attribute (sl-HARQ-FeedbackEnabled) corresponding to the logical channel shall be: disabled.

Step S33: the first terminal performs selection of a logical channel belonging to the fourth destination ID selected in Step S32.

Optionally, the first terminal selects the logical channel belonging to the destination ID under the following conditions:
E31: there is transmittable SL data;
E32: if the SL grant is a type 1 pre-configured grant, the type 1 pre-configured grant (sl-configuredGrantType1Allowed) is allowed to be used in configuration information corresponding to the logical channel;
E33: if the SL grant is a pre-configured grant, a pre-configured grant list allowed to be used (sl-AllowedCG-List) in configuration information corresponding to the logical channel contains a pre-configured grant index corresponding to the SL grant; and
E34: the HARQ attribute of the logical channel meets a fifth condition;
wherein the fifth condition includes one of:
E341: if the SL grant is configured with a PSFCH, the HARQ attribute of a channel with a highest priority belonging to the fourth destination ID is set to be enabled, and the HARQ attribute of the logical channel is also: enabled;
E342: if the SL grant is configured with a PSFCH, the HARQ attribute of a channel with a highest priority belonging to the fourth destination ID is set to be disabled, and the HARQ attribute of the logical channel is also: disabled; and
E343: if the SL grant is configured with no PSFCH, the HARQ attribute of the logical channel is: disabled.

Step S34: the first terminal performs a resource allocation.

For the logical channel selected in Step S33, the resource allocation is performed in the following process:
a first round of resource allocation: allocating resources to the logical channels with SBj>0 according to sPBR in a descending order of the priorities of the logical channels, and updating SBj; and
a second round of resource allocation: in case that there are any remaining resources, continuing to allocate resources to the logical channels in the descending order of the priorities (regardless of whether SBj is greater than 0) until resources are exhausted or resources are allocated to all data.

It should be noted that at least one embodiment of the present disclosure provides an information processing method. If a first terminal receives COT information from a destination ID, the first terminal performs a destination ID selection based on the COT information and/or only considers a logical channel whose CAPC value is less than or equal to a value of the CAPC corresponding to the COT information when performing selection of a logical channel belonging to a selected destination ID after a certain destination ID is selected. By this method, it can be ensured that the terminal can select an appropriate destination ID and/or logical channel when performing LCP in a COT sharing mechanism, and that the terminal can smoothly perform a sidelink interface resource allocation in the COT sharing mechanism, thereby improving the success rate of data transmission.

The technical solutions according to the embodiments of the present disclosure are applicable to various systems, especially 5G systems. For example, the applicable system may be a global system of mobile communication (GSM) system, a code division multiple access (CDMA) system, a wideband code division multiple access (WCDMA) general packet radio service (GPRS) system, a Long Term Evolution (LTE) system, an LTE frequency division duplex (FDD) system, an LTE time division duplex (TDD) system, a Long Term Evolution Advanced (LTE-A) system, a universal mobile telecommunication system (UMTS), a worldwide interoperability for microwave access (WiMAX) system, a 5G New Radio (NR) system, etc. These various systems each include a terminal (also called terminal device) and a network device. The system may further include a core network part, such as an evolved packet system (EPS), a 5G system (5GS), etc.

The terminal (also called terminal device) involved in the embodiments of the present disclosure may refer to a device providing voice and/or data connectivity to a user, a handheld device having a wireless connection function, any other processing device connected to a wireless modem, etc. In different systems, the name of the terminal device may be different, and for example, in a 5G system, the terminal device may be referred to as user equipment (UE). The wireless terminal device may be communicated with one or more core networks (CNs) via a radio access network (RAN). The wireless terminal device may be a mobile terminal device such as a mobile phone (or referred to as a "cellular" phone) or a computer with a mobile terminal device, such as a portable, pocket-sized, handheld, computer-embedded or vehicle-mounted mobile device, which exchanges speech and/or data with the radio access network. For example, (the terminal device may be) a personal communication service (PCS) phone, a cordless phone, a session initiated protocol (SIP) phone, a wireless local loop (WLL) station, a personal digital assistant (PDA), or the like. The wireless terminal device may also be referred to as a system, a subscriber unit, a subscribe station, a mobile station, a mobile, a remote station, an access point, a remote terminal, an access terminal, a user terminal, a user agent, and a user device, which are not limited in the embodiments of the present disclosure.

The network device involved in the embodiments of the present disclosure may be a base station, which may include a plurality of cells that provide services to the terminal. Depending on the specific application scenarios, the base station may also be referred to as an access point, or a device in an access network which is communicated with the wireless terminal device over an air interface through one or more sectors, or have other names. The network device may be used to exchange the received air frames with an Internet Protocol (IP) packet, so as to serve as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a network device (base transceiver station, BTS) in global system for mobile communications (GSM) or code division multiple access (CDMA), or a network device (NodeB) in wide-band dode division multiple access (WCDMA), or an evolutional network device (evolutional NodeB, eNB or e-NodeB) in a Long Term Evolution (LTE) system, or a 5G base station (gNB) in a 5G network architecture (next generation system), or a Home evolved Node B (HeNB), a relay node, a femto, a pico, etc., which is not limited in the embodiments of the present disclosure. In some network architectures, the network device may include a centralized unit (CU) node and a distributed unit (DU) node, and a CU and a DU may also be geographically separated.

The network device and the terminal device may each use one or more antennas to perform multi input multi output (MIMO) transmission which may be single user MIMO (SU-MIMO) or multiple user MIMO (MU-MIMO). Depending on the form and the number of the antenna combinations, the MIMO transmission may be 2-dimension MIMO (2D MIMO), 3-dimension MIMO (3D MIMO), full dimension MIMO (FD-MIMO) or massive-MIMO, and may also be diversity transmission or precoding transmission or beamforming transmission, etc.

As illustrated in Fig. 2, an embodiment of the present disclosure provides an information transmission method performed by a second terminal, the method including:
Step S201: sending Channel Occupancy Time (COT) information through first signaling, the COT information enabling a first terminal to perform selection of a first object based on the COT information, and the first object including a destination ID and/or a logical channel;
wherein the first signaling includes at least one of:
   physical layer signaling;
   an SL MAC CE; or
   PC5 radio resource control (RRC) signaling.

Optionally, the COT information includes at least one of:
a COT time duration;
a COT start position; or
a value of a CAPC corresponding to the COT information.

It should be noted that all the implementations in the above embodiment are applicable to the embodiments of the information transmission method applied to the side of the second terminal, and can achieve the same technical effects, which will not be repeated here.

As illustrated in Fig. 3, an embodiment of the present disclosure provides an information processing apparatus 300 applied to a first terminal, the information processing apparatus 300 including:
a first receiving unit 301, configured to receive Channel Occupancy Time (COT) information from at least one destination ID; and
a performing unit 302, configured to perform selection of a first object based on the COT information, wherein the first object includes a destination ID and/or a logical channel.

Optionally, in a case where the first object includes a logical channel, the performing unit 302 is configured to:
select a first destination ID;
determine, according to the COT information sent from the first destination ID, a channel access priority class (CAPC) corresponding to the COT information; and
perform selection of a logical channel belonging to the first destination ID according to the CAPC;
wherein a CAPC value o of the logical channel is less than or equal to a value of the CAPC corresponding to the COT information.

Optionally, an implementation of performing selection of a logical channel belonging to the first destination ID according to the CAPC includes:
in case that an SL grant falls within a COT time period indicated by the COT information corresponding to the first destination ID, performing the selection of the logical channel belonging to the first destination ID according to the CAPC.

Optionally, the implementation of selecting the first destination ID includes:
in case that an SL grant falls within a COT time period indicated by the COT information sent from a second destination ID, preferentially selecting the second destination ID as the first destination ID when selecting the first destination ID.

Optionally, the information processing apparatus 300 further includes:
a first obtaining unit configured to obtain priorities of the first objects corresponding to the second destination IDs when the number of the second destination IDs is greater than 1; and
a first determining unit configured to determine the second destination ID with the second object having the highest priority as the first destination ID;
wherein the first object is an SL medium access control control element (MAC CE) and/or a logical channel belonging to the second destination ID.

Optionally, in a case where the first object includes a destination ID, the performing unit 302 is configured to:
in case that an SL grant falls within a COT time period indicated by the COT information sent from a third destination ID, preferentially selecting the third destination ID as a selected fourth destination ID when selecting the destination ID.

Optionally, the information processing apparatus 300 further includes:
a second obtaining unit, configured to obtain priorities of second objects corresponding to the third destination IDs when the number of the third destination IDs is greater than 1; and
a second determining unit, configured to determine a third destination ID with the second object having the highest priority as the fourth destination ID;
wherein the second object is an SL MAC CE and/or a logical channel belonging to the third destination ID.

Optionally, the information processing apparatus 300 further includes:
a second receiving unit, configured to receive the COT information through first signaling;
wherein the first signaling includes at least one of:
   physical layer signaling;
   an SL MAC CE; or
   PC5 radio resource control (RRC) signaling.

Optionally, the COT information includes at least one of:
a COT time duration;
a COT start position;
a value of a CAPC corresponding to the COT information.

It should be noted that these apparatus embodiments are in one-to-one correspondence with the above method embodiments, so all of the implementations in the method embodiments are applicable to the apparatus embodiments and the same technical effect can be achieved.

It should be noted that the division of the units in the embodiments of the present disclosure is schematic, which is only a division of logical functions, and there may be other division modes in practice. In addition, various functional units in the embodiments of the present disclosure may be integrated into a processing unit, or physically existed separately, or two or more units may be integrated into one unit. The integrated unit may be implemented in the form of hardware, or a software functional unit.

The integrated unit, if implemented in the form of a software functional unit and sold or used as a separate product, may be stored in a processor-readable storage medium. Based on such understanding, the essence of a technical solution of the present disclosure or a part thereof that contributes to the related art or all or part of the technical solution may be embodied in the form of a software product. The computer software product is stored in a storage medium, and includes a plurality of instructions to cause a computer device (which may be a personal computer, a server, a network device, or the like) or a processor to perform all or part of the steps of the method described in various embodiments of the present disclosure. The storage medium includes various media capable of storing program codes, such as a U disk, a mobile hard disk, a read-only memory (ROM), a random access memory (RAM), a magnetic disk, or an optical disk.

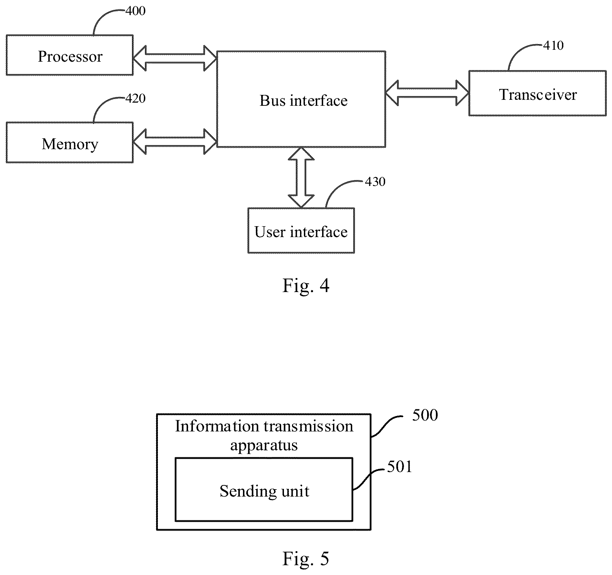

As illustrated in FIG. 4, an embodiment of the present disclosure further provides a terminal which is a first terminal, including a processor 400, a transceiver 410, a memory 420, and a program stored in the memory 420 and runnable in the processor 400; wherein the transceiver 410 is connected to the processor 400 and the memory 420 through a bus interface, and wherein the processor 400 is configured to read the program in the memory and perform processes of:
receiving Channel Occupancy Time (COT) information from at least one destination ID; and
performing selection of a first object based on the COT information, the first object including a destination ID and/or a logical channel.

The transceiver 410 is configured to receive and transmit data under the control of the processor 400.

In which, in FIG. 4, a bus architecture may include any number of interconnected buses and bridges, and specifically various circuits of one or more processors represented by processor 400 and the memory represented by memory 420 are linked together. The bus architecture may also link together various other circuits, such as a peripheral device, a voltage stabilizer, a power management circuit, etc., which are well known in the art and not further described herein. The bus interface provides an interface. The transceiver 410 may be composed of a plurality of elements, i.e., including a transmitter and a receiver, so as to provide units for communication with various other devices over a transmission medium including a wireless channel, a wired channel, a fiber optic cable, or the like. For different user equipment, the user interface 430 may also be an interface capable of externally or internally connecting a desired device including, but not limited to, a keypad, a display, a speaker, a microphone, a joystick, or the like.

The processor 400 is responsible for managing a bus architecture and general processing, and the memory 420 may store data used by the processor 400 in performing operations.

Optionally, the processor 400 may be a central processing unit (CPU), an application specific integrated circuit (ASIC), a field-programmable gate array (FPGA), or a complex programmable logic device (CPLD). The processor may also adopt a multi-core architecture.

The processor calls the computer program stored in the memory, and performs any one of the methods in the embodiments of the present disclosure according to an obtained executable instruction. The processor and the memory may also be physically separated.

Optionally, in a case where the first object includes a logical channel, the processor is configured to read the computer program in the memory and perform the following steps:
selecting a first destination ID;
determining, according to the COT information sent from the first destination ID, a channel access priority class (CAPC) corresponding to the COT information; and
performing selection of a logical channel belonging to the first destination ID according to the CAPC;
wherein the CAPC value of the logical channel is less than or equal to the CAPC value corresponding to the COT information.

Optionally, the processor is configured to read the computer program in the memory and perform the following step:
in case that an SL grant falls within a COT time period indicated by the COT information corresponding to the first destination ID, performing the selection of the logical channel belonging to the first destination ID according to the CAPC.

Optionally, the processor is configured to read the computer program in the memory and perform the following step:
in case that an SL grant falls within a COT time period indicated by the COT information sent from a second destination ID, preferentially selecting the second destination ID as the first destination ID when selecting the first destination ID.

Optionally, the processor is configured to read the computer program in the memory and perform the following steps:
obtaining priorities of second objects corresponding to the second destination IDs when the number of the second destination IDs is greater than 1; and
determining the second destination ID with the second object having the highest priority as the first destination ID;
wherein the second object is an SL medium access control control element (MAC CE) and/or a logical channel belonging to the second destination ID.

Optionally, in a case where the first object includes a destination ID, the processor is configured to read the computer program in the memory and perform the following step:
in case that an SL grant falls within a COT time period indicated by the COT information sent from a third destination ID, preferentially selecting the third destination ID as a selected fourth destination ID when selecting the destination ID.

Optionally, the processor is configured to read the computer program in the memory and perform the following steps:
obtaining priorities of second objects corresponding to the third destination IDs when the number of the third destination IDs is greater than 1; and
determining a third destination ID with the second object having the highest priority as the fourth destination ID;
wherein the second object is an SL MAC CE and/or a logical channel belonging to the third destination ID.

Optionally, the processor is configured to read the computer program in the memory and perform the following step:
receiving the COT information through first signaling;
wherein the first signaling includes at least one of:
   physical layer signaling;
   an SL MAC CE; or
   PC5 radio resource control (RRC) signaling.

Optionally, the COT information includes at least one of:
a COT time duration;
a COT start position; or
a value of a CAPC corresponding to the COT information.

It should be noted that the above terminal according to the embodiment of the present disclosure can implement all methodical steps implemented by the above method embodiments, and can achieve the same technical effects, so the parts and the advantageous effects of this embodiment the same as those of the method embodiments will not be described in detail.

The embodiments of the present disclosure further provide a processor-readable storage medium which stores a computer program, wherein when executed by a processor, the computer program implements the steps of the information transmission method applied to a network device. The processor-readable storage medium may be any available medium or data storage device accessible to the processor, including but not limited to, a magnetic storage (e.g., a floppy disk, a hard disk, a magnetic tape, magneto-optical (MO) disk, etc.), an optical storage (e.g., a compact disc (CD), a digital video disc (DVD), a Blu-ray Disc (BD), a high-definition versatile disc (HVD), etc.), and a semiconductor memory (e.g., a read-only memory (ROM), an erasable programmable ROM (EPROM), an Electrically EPROM (EEPROM), an NAND FLASH, a solid state disk or solid state drive (SSD)), etc.

As illustrated in Fig. 5, an embodiment of the present disclosure provides an information transmission apparatus 500 which is applied to a second terminal, the information transmission apparatus 500 including:
a sending unit 501 configured to send Channel Occupancy Time (COT) information through first signaling, the COT information enabling a first terminal to perform selection of a first object based on the COT information, and the first object including a destination ID and/or a logical channel;
wherein the first signaling includes at least one of:
   physical layer signaling;
   an SL MAC CE; or
   PC5 radio resource control (RRC) signaling.

Optionally, the COT information includes at least one of:
a COT time duration;
a COT start position; or
a value of a CAPC corresponding to the COT information.

It should be noted that these apparatus embodiments are in one-to-one correspondence with the above method embodiments, so all of the implementations in the method embodiments are applicable to the apparatus embodiments and the same technical effect can be achieved.

It should be noted that the division of the units in the embodiments of the present disclosure is schematic, which is only a division of logical functions, and there may be other division modes in practice. In addition, various functional units in the embodiments of the present disclosure may be integrated into a processing unit, or physically existed separately, or two or more units may be integrated into one unit. The integrated unit may be implemented in the form of hardware, or a software functional unit.

The integrated unit, if implemented in the form of a software functional unit and sold or used as a separate product, may be stored in a processor-readable storage medium. Based on such understanding, the essence of a technical solution of the present disclosure or a part thereof that contributes to the related art or all or part of the technical solution may be embodied in the form of a software product. The computer software product is stored in a storage medium, and includes a plurality of instructions to cause a computer device (which may be a personal computer, a server, a network device, or the like) or a processor to perform all or part of the steps of the method described in various embodiments of the present disclosure. The storage medium includes various media capable of storing program codes, such as a U disk, a mobile hard disk, a read-only memory (ROM), a random access memory (RAM), a magnetic disk, or an optical disc.

An embodiment of the present disclosure further provides a terminal, which is a second terminal. The structure of the second terminal is illustrated in Fig. 4, which is not repeated here.

In which, the processor is configured to read the computer program in the memory and perform the following steps:
sending, by the transceiver, Channel Occupancy Time (COT) information through first signaling, the COT information enabling a first terminal to perform selection of a first object based on the COT information, and the first object including a destination ID and/or a logical channel;
wherein the first signaling includes at least one of:
   physical layer signaling;
   an SL MAC CE; or
   PC5 radio resource control (RRC) signaling.

Optionally, the COT information includes at least one of:
a COT time duration;
a COT start position; or
a value of a CAPC corresponding to the COT information.

It should be noted that the above terminal according to the embodiment of the present disclosure can implement all methodical steps implemented by the above method embodiments, and can achieve the same technical effects, so the parts and the advantageous effects of this embodiment the same as those of the method embodiments will not be described in detail.

The embodiments of the present disclosure further provide a processor-readable storage medium which stores a computer program, wherein when executed by a processor, the computer program implements the steps of the information transmission method applied to the second terminal. The processor-readable storage medium may be any available medium or data storage device accessible to the processor, including but not limited to, a magnetic storage (e.g., a floppy disk, a hard disk, a magnetic tape, magneto-optical (MO) disk, etc.), an optical storage (e.g., a compact disc (CD), a digital video disc (DVD), a Blu-ray Disc (BD), a high-definition versatile disc (HVD), etc.), and a semiconductor memory (e.g., a read-only memory (ROM), an erasable programmable ROM (EPROM), an Electrically EPROM (EEPROM), an NAND FLASH, a solid state disk or solid state drive (SSD)), etc.

Those skilled in the art will appreciate that an embodiment of the present disclosure may be provided as a method, a system, or a computer program product. Accordingly, the present disclosure may take the form of entirely hardware embodiments, entirely software embodiments, or embodiments combining software and hardware aspects. Moreover, the present disclosure may take the form of a computer program product embodied on one or more computer-usable storage media (including but not limited to a disk storage, an optical storage, etc.) containing computer-usable program codes.

The present disclosure is described with reference to the flowcharts and/or the block diagrams of the method, the apparatus (system), and the computer program product according to the embodiments of the present disclosure. It should be understood that each flow and/or block in a flowchart and/or a block diagram, and combinations of the flows and/or the blocks in the flowchart and/or the block diagram may be implemented by computer-executable instructions. These computer-executable instructions may be provided to a processor of a general-purpose computer, a special-purpose computer, an embedded processing machine or other programmable data processing device to produce a machine, such that the instructions executed by the processor of the computer or other programmable data processing device create means to realize function(s) specified in one or more flows of the flowchart and/or one or more blocks in the block diagram.

These processor-executable instructions may also be stored in a processor-readable memory capable of guiding the computer or other programmable data processing device to work in a particular way, such that the instructions stored in the processor-readable memory can produce manufacture articles including an instructing device which realizes function(s) specified in one or more flows in the flowchart and/or one or more blocks in the block diagram.

These processor-executable instructions may also be loaded onto a computer or other programmable data processing device, such that a series of operation steps can be performed on the computer or other programmable data processing device to produce a processing realized by the computer, thus the instructions executed on the computer or other programmable device provide step(s) for realizing function(s) specified in one or more flows in the flowchart and/or one or more blocks in the block diagram.

It should be noted that the division of the modules is only a division of logical functions, and in actual implementation, the modules may be entirely or partially integrated into a physical entity, or physically separated. In addition, these modules may all be implemented by calling software with a processing element; or all be implemented in the form of hardware; or some implemented by calling software with a processing element, and some implemented in the form of hardware. For example, a module may be a separately disposed processing element, or may be implemented by being integrated in a chip of the apparatus. In addition, the module may also be stored in the form of program codes in a memory of the apparatus, and a processing element of the apparatus calls and executes the function of the module. The implementations of other modules are similar. In addition, all or part of these modules may be integrated together or independently implemented. The processing element here may be an integrated circuit with a signal processing capability. During implementation, the steps of the above method or the above modules may be completed by a hardware integrated logical circuit in the processor element or instructions in the form of software.

For example, various modules, units, sub-units, or sub-modules may be one or more integrated circuits configured to implement the above methods, such as one or more application specific integrated circuits (ASICs), or one or more microprocessors (digital signal processors, DSPs), or one or more field programmable gate arrays (FPGAs), etc. For another example, when one of the above modules is implemented by calling program codes with a processing element, the processing element may be a general-purpose processor, such as a central processing unit (CPU) or any other processor capable of calling the program codes. For still another example, these modules may be integrated and implemented in the form of a system-on-a-chip (SOC).

The terms such as "first" and "second" in the Specification and the claims of the present disclosure are used to distinguish similar objects and are not necessarily to describe a particular order or precedence. It should be understood that the data so used may be interchanged under appropriate circumstances, so that the embodiments of the present disclosure described here, for example, are implemented in an order in addition to those illustrated or described here. Further, the terms "comprise", "have" and any variations thereof, are intended to cover non-exclusive inclusions, e.g., a process, a method, a system, a product, or a device that includes a series of steps or elements is not necessarily limited to the explicitly listed steps or units, but may include other steps or units not expressly listed or inherent to such process, method, product, or device. In addition, the term "and/or" used in the Specification and the claims means at least one of the connected objects. For example, A and/or B and/or C means that there are seven cases, i.e., A exists alone, B exists alone, C exists alone, both A and B exist, both B and C exist, both A and C exist, and A, B and C all exist. Similarly, "at least one of A and B" in the Specification and the claims should be understood as "A exists alone, B exists alone, or both A and B exist".

Obviously, those skilled in the art can make various modifications and variations to the present disclosure without departing from the spirit and the scope of the present disclosure. Thus, when these modifications and variations of the present disclosure fall within the scope of the claims of the present disclosure and the technical equivalents thereof, the present disclosure is also intended to include these modifications and variations.

## Claims

1. An information processing method, performed by a first terminal, and comprising:
receiving Channel Occupancy Time (COT) information from at least one destination identifier (ID); and
performing selection of a first object based on the COT information, wherein the first object comprises a destination ID and/or a logical channel.

2. The method according to claim 1, wherein in a case where the first object comprises the logical channel, the performing the selection of the first object based on the COT information comprises:
selecting a first destination ID;
determining, according to the COT information sent from the first destination ID, a channel access priority class (CAPC) corresponding to the COT information; and
performing selection of a logical channel belonging to the first destination ID according to the CAPC;
wherein a CAPC value of the logical channel is less than or equal to a value of the CAPC corresponding to the COT information.

3. The method according to claim 2, wherein the performing the selection of the logical channel belonging to the first destination ID according to the CAPC comprises:
in case that a sidelink (SL) grant falls within a COT time period indicated by the COT information corresponding to the first destination ID, performing the selection of the logical channel belonging to the first destination ID according to the CAPC.

4. The method according to claim 2, wherein the selecting the first destination ID comprises:
in case that an SL grant falls within a COT time period indicated by the COT information sent from a second destination ID, preferentially selecting the second destination ID as the first destination ID when selecting the first destination ID.

5. The method according to claim 4, further comprising:
obtaining priorities of second objects corresponding to the second destination IDs when the number of the second destination IDs is greater than 1; and
determining the second destination ID with the second object having the highest priority as the first destination ID;
wherein the second object is an SL medium access control control element (MAC CE) and/or a logical channel belonging to the second destination ID.

6. The method according to claim 1, wherein in a case where the first object comprises the destination ID, the performing the selection of the first object based on the COT information comprises:
in case that an SL grant falls within a COT time period indicated by the COT information sent from a third destination ID, preferentially selecting the third destination ID as a selected fourth destination ID when selecting the destination ID.

7. The method according to claim 6, further comprising:
obtaining priorities of second objects corresponding to the third destination IDs when the number of the third destination IDs is greater than 1; and
determining a third destination ID with the second object having the highest priority as the fourth destination ID;
wherein the second object is an SL MAC CE and/or a logical channel belonging to the third destination ID.

8. The method according to claim 1, further comprising:
receiving the COT information through first signaling;
wherein the first signaling comprises at least one of:
physical layer signaling;
an SL MAC CE; or
PC5 radio resource control (RRC) signaling.

9. The method according to any one of claims 1 to 8, wherein the COT information comprises at least one of:
a COT time duration;
a COT start position; or
a value of a CAPC corresponding to the COT information.

10. An information transmission method, performed by a second terminal, and comprising:
sending COT information through first signaling, the COT information enabling a first terminal to perform selection of a first object based on the COT information, and the first object comprising a destination ID and/or a logical channel;
wherein the first signaling comprises at least one of:
physical layer signaling;
an SL MAC CE; or
PC5 RRC signaling.

11. The method according to claim 10, wherein the COT information comprises at least one of:
a COT time duration;
a COT start position; or
a value of a CAPC corresponding to the COT information.

12. A terminal, the terminal being a first terminal, and comprising a memory, a transceiver and a processor, wherein
the memory is configured to store a computer program; the transceiver is configured to transmit and receive data under the control of the processor; and the processor is configured to read the computer program in the memory and perform the following steps:
receiving COT information from at least one destination ID; and
performing selection of a first object based on the COT information, wherein the first object comprises a destination ID and/or a logical channel.

13. The terminal according to claim 12, wherein in a case where the first object comprises the logical channel, the processor is configured to read the computer program in the memory and perform the following steps:
selecting a first destination ID;
determining, according to the COT information sent from the first destination ID, a CAPC corresponding to the COT information; and
performing selection of a logical channel belonging to the first destination ID according to the CAPC;
wherein a CAPC value of the logical channel is less than or equal to a value of the CAPC corresponding to the COT information.

14. The terminal according to claim 13, wherein the processor is configured to read the computer program in the memory and perform the following step:
in case that an SL grant falls within a COT time period indicated by the COT information corresponding to the first destination ID, performing the selection of the logical channel belonging to the first destination ID according to the CAPC.

15. The terminal according to claim 13, wherein the processor is configured to read the computer program in the memory and perform the following step:
in case that an SL grant falls within a COT time period indicated by the COT information sent from a second destination ID, preferentially selecting the second destination ID as the first destination ID when selecting the first destination ID.

16. The terminal according to claim 15, wherein the processor is configured to read the computer program in the memory and perform the following steps:
obtaining priorities of second objects corresponding to the second destination IDs when the number of the second destination IDs is greater than 1; and
determining the second destination ID with the second object having the highest priority as the first destination ID;
wherein the second object is an SL MAC CE and/or a logical channel belonging to the second destination ID.

17. The terminal according to claim 12, wherein in a case where the first object comprises the destination ID, the processor is configured to read the computer program in the memory and perform the following step:
in case that an SL grant falls within a COT time period indicated by the COT information sent from a third destination ID, preferentially selecting the third destination ID as a selected fourth destination ID when selecting the destination ID.

18. The terminal according to claim 17, wherein the processor is configured to read the computer program in the memory and perform the following steps:
obtaining priorities of second objects corresponding to the third destination IDs when the number of the third destination IDs is greater than 1; and
determining a third destination ID with the second object having the highest priority as the fourth destination ID;
wherein the second object is an SL MAC CE and/or a logical channel belonging to the third destination ID.

19. The terminal according to claim 12, wherein the processor is configured to read the computer program in the memory and perform the following step:
receiving the COT information through first signaling;
wherein the first signaling comprises at least one of:
physical layer signaling;
an SL MAC CE; or
PC5 RRC signaling.

20. The terminal according to any one of claims 12 to 19, wherein the COT information comprises at least one of:
a COT time duration;
a COT start position; or
a value of a CAPC corresponding to the COT information.

21. A terminal, the terminal being a second terminal, and comprising a memory, a transceiver and a processor, wherein
the memory is configured to store a computer program; the transceiver is configured to transmit and receive data under the control of the processor; and the processor is configured to read the computer program in the memory and perform the following steps:
sending, by the transceiver, COT information through first signaling, the COT information enabling a first terminal to perform selection of a first object based on the COT information, and the first object comprising a destination ID and/or a logical channel;
wherein the first signaling comprises at least one of:
physical layer signaling;
an SL MAC CE; or
PC5 RRC signaling.

22. The terminal according to claim 21, wherein the COT information comprises at least one of:
a COT time duration;
a COT start position; or
a value of the CAPC corresponding to the COT information.

23. An information processing apparatus applied to a first terminal, the information processing apparatus comprising:
a first receiving unit, configured to receive COT information from at least one destination ID; and
a performing unit, configured to perform selection of a first object based on the COT information, wherein the first object comprises a destination ID and/or a logical channel.

24. The information processing apparatus according to claim 23, wherein in a case where the first object comprises the logical channel, the performing unit is configured to:
select a first destination ID;
determine, according to the COT information sent from the first destination ID, a CAPC corresponding to the COT information; and
perform selection of a logical channel belonging to the first destination ID according to the CAPC;
wherein a CAPC value of the logical channel is less than or equal to a value of the CAPC corresponding to the COT information.

25. The information processing apparatus according to claim 24, wherein the performing the selection of the logical channel belonging to the first destination ID according to the CAPC comprises:
in case that an SL grant falls within a COT time period indicated by the COT information corresponding to the first destination ID, performing the selection of the logical channel belonging to the first destination ID according to the CAPC.

26. The information processing apparatus according to claim 24, wherein the selecting the first destination ID comprises:
in case that an SL grant falls within a COT time period indicated by the COT information sent from a second destination ID, preferentially selecting the second destination ID as the first destination ID when selecting the first destination ID.

27. The information processing apparatus according to claim 26, further comprising:
a first obtaining unit, configured to obtain priorities of the first objects corresponding to the second destination IDs when the number of the second destination IDs is greater than 1;
a first determining unit, configured to determine the second destination ID with the second object having the highest priority as the first destination ID;
wherein the first object is an SL MAC CE and/or a logical channel belonging to the second destination ID.

28. The information processing apparatus according to claim 23, wherein in a case where the first object comprises the destination ID, the performing unit is configured to:
in case that an SL grant falls within a COT time period indicated by the COT information sent from a third destination ID, preferentially select the third destination ID as a selected fourth destination ID when selecting the destination ID.

29. The information processing apparatus according to claim 28, further comprising:
a second obtaining unit, configured to obtain priorities of second objects corresponding to the third destination IDs when the number of the third destination IDs is greater than 1; and
a second determining unit, configured to determine a third destination ID with the second object having the highest priority as the fourth destination ID;
wherein the second object is an SL MAC CE and/or a logical channel belonging to the third destination ID.

30. The information processing apparatus according to claim 23, further comprising:
a second receiving unit, configured to receive the COT information through first signaling;
wherein the first signaling comprises at least one of:
physical layer signaling;
an SL MAC CE; or
PC5 RRC signaling.

31. The information processing apparatus according to any one of claims 23 to 30, wherein the COT information comprises at least one of:
a COT time duration;
a COT start position; or
a value of a CAPC corresponding to the COT information.

32. An information transmission apparatus applied to a second terminal, the information transmission apparatus comprising:
a sending unit, configured to send COT information through first signaling, the COT information enabling a first terminal to perform selection of a first object based on the COT information, and the first object comprising a destination ID and/or a logical channel;
wherein the first signaling comprises at least one of:
physical layer signaling;
an SL MAC CE; or
PC5 RRC signaling.

33. The information transmission apparatus according to claim 32, wherein the COT information comprises at least one of:
a COT time duration;
a COT start position; or
a value of a CAPC corresponding to the COT information.

34. A processor-readable storage medium storing a computer program, wherein the computer program, when being executed by a processor, cause the processor to perform the method according to any one of claims 1 to 11.
